# EUROPEAN PATENT APPLICATION

(11) **EP 1 742 027 A2**
(43) Date of publication of application: **10.01.2007**
(21) Application number: 06253342.7
(22) Date of filing: 27.06.2006
(51) Int. Cl.: G01F 19/00, A47F 13/08

(54) **Measuring scoop and method for using the scoop together with containers having a lip being formed by an inner edge of the container's rim**

(30) Priority: 06.07.2005 US 175589
(71) Applicant: Sonoco Development, Inc., Hartsville, South Carolina 29550 (US)
(72) Inventor: Setty, Thomas J., Florence South Carolina 29505 (US); Ziegenfelder, Kurt Allen, Florence South Carolina 29501 (US)
(74) Representative: Kinsler, Maureen Catherine

(57) **Abstract**

The present invention provides an improved scooping and measuring device (10) that not only allows a user to scoop product out of a lipped container when there is ample product in the container, but also advantageously includes at least one protruding feature (13) that allows a user to access remaining product that is typically trapped between the inner wall of the container and the container lip when the container is inverted. The protruding features (13) of the scooping device allow a user to tip the container upside down and remove the otherwise trapped product by fitting the protruding features (13) between the container inner wall and the container lip.

## Description

### FIELD OF THE INVENTION

The present invention relates generally to measuring and scooping devices, and, more particularly, to an improved scooping device for scooping out the contents of a container having a lipped rim.

### BACKGROUND OF THE INVENTION

Containers that store consumer goods often include rigid ends that not only provide annular support for the containers, but also allow the containers to include resealable closures. Resealable closures are provided so that after the container is first opened, any remaining product may be resealed inside the container to provide a protective barrier against the ingress of oxygen, moisture, contaminants, and other undesirable matter. The rigid ends that support these closures often include rims that extend radially inward, thus providing an opening that is smaller than the overall outer perimeter of the container. Often these rims contain a lip feature such as a rolled edge that may protrude toward the interior of the container. Examples of these closure features include the Sealed Safe® and Ultra-Seal® closure systems available on container products produced by Sonoco Products Company.

Consumer goods such as coffee, powdered infant formula, mashed potato mix, powdered milk, cocoa mixes, performance drink mixes, and the like are often packaged and stored in containers having resealable closures because products of this type are not typically consumed at one time. Also, because these types of products are often mixed with water or some other substance, they are usually accompanied by measuring and scooping devices. Existing measuring and scooping devices easily allow a consumer to measure and scoop out the appropriate amount of product when there is an ample amount of product left in the container. However, as the amount of product left in the container decreases, and especially when there is very little product left in the container, existing measuring and scooping devices do not readily allow the consumer to scoop out all of the remaining product. The consumer's inability to access this product is a common complaint in the container industry. In an effort to remove the product left in the container, consumers naturally tip the container upside down. However, because of the rim and lip design located at the rigid end, the remaining product often becomes trapped, or even worse, the product spills out uncontrollably. The inability to access the last of the remaining product left in the container and the fact that the product spills uncontrollably if the container is turned upside down, leads to frustrated consumers who may feel as though they did not get their money's worth from the product they purchased. Therefore, there is a need for an improved scooping and measuring device that will easily and efficiently allow a consumer to measure and scoop product contained in containers having rigid ends. The measuring and scooping device should not only allow a consumer to remove product when there is an ample amount of product in the container, but should also allow a consumer to access the last remaining product left in the container.

### BRIEF SUMMARY OF THE INVENTION

The present invention provides an improved scooping and measuring device that not only allows a user to scoop product out of a container when there is ample product in the container, but also advantageously includes at least one protruding feature that allows a user to access remaining product that is typically trapped between the inner wall of the container and the container rim or lip. The protruding feature of the scooping device allows a user to tip the container upside down and easily remove the otherwise trapped product by fitting the protruding feature between the inner container wall and the lip of the container rim.

The present invention includes a scooping device for use with a product container that has a container wall with an inner surface, an outer surface, and an upper rim encircling an opening of the container. The container may also include a lip attached to the radially inner edge of the rim encircling the opening of the container. The scooping device comprises a bottom wall and a side wall upstanding from at least a portion of an outer periphery of the bottom wall to form a main receptacle for product scooped from the container, and may include a handle attached to the side wall. The side wall further defines at least one protruding channel feature for use in scooping product located between the inside surface of the container wall and the lip of the container rim. The side wall may further define a pair of protruding channel features for use in scooping product located between the inside surface of the container wall and the lip of the container rim. The side wall may also further define a front side, a rear side, a first lateral side, and a second lateral side. A handle of the scooping device may be attached to the rear side of the side wall. In one embodiment of the present invention, at least one protruding channel feature may be defined by the front side. The front side may further define a pair of protruding channel features. The at least one protruding channel feature may further define a width, wherein the width is substantially equal to or less than a distance between the container wall inner surface and an outer surface of the lip of the container rim. The protruding channel feature may further define a depth, wherein the depth is substantially equal to or greater than a distance between an inside surface of the container rim and an end surface of the lip of the container rim.

In another embodiment of the present invention, the at least one protruding channel feature may be defined by the rear side of the side wall. The rear side may further define a pair of protruding channel features and a handle may be attached to the rear side between the pair of channel features. The at least one protruding channel feature may further define a width, wherein the width is substantially equal to or less than a distance between the container wall inner surface and an outer surface of the lip of the container rim. The protruding channel feature may further define a depth, wherein the depth is substantially equal to or greater than a distance between an inside surface of the container rim and an end surface of the lip of the container rim.

As a result, the present invention provides an improved scooping device for use with lipped containers. The improved scooping device includes a bottom wall and a side wall upstanding from at least a portion of an outer periphery of the bottom wall to form a main receptacle and a handle attached to the perimeter housing wall. The scooping device also includes at least one protruding channel feature for use in scooping product located between the inside surface of the container wall and the lip of the container rim. Advantageously, the present invention in one embodiment includes a pair of protruding channel features so that the scooping device may be easily manipulated by both left-handed and right-handed users.

### BRIEF DESCRIPTION OF THE DRAWINGS

Having thus described the invention in general terms, reference will now be made to the accompanying drawings, which are not necessarily drawn to scale, and wherein:
FIG. 1 is a perspective view showing an improved scooping device in accordance with one embodiment of the present invention;
FIG. 1A is a side view of the scooping device depicted in FIG. 1;
FIG. 1B is a top view of the scooping device depicted in FIG. 1;
FIG. 1C is a detail view of a portion of the scooping device depicted in FIG. 1B;
FIG. 2 is a perspective view of a container for use with a scooping device in accordance with one embodiment of the present invention;
FIG. 3 is a cross-sectional view of a portion of the container depicted in FIG. 2;
FIG. 4 is a perspective view of a user using the scooping device depicted in FIG. 1 to access remaining product from a container;
FIG. 5 is a perspective view of an improved scooping device in accordance with another embodiment of the present invention;
FIG. 5A is a side view of the scooping device depicted in FIG. 5;
FIG. 6 is a perspective view of an improved scooping device in accordance with another embodiment of the present invention;
FIG. 6A is a side view of the scooping device depicted in FIG. 6;
FIG. 7 is a perspective view of an improved scooping device in accordance with another embodiment of the present invention;
FIG. 7A is a side view of the scooping device depicted in FIG. 7;
FIG. 8 is a perspective view of an improved scooping device in accordance with another embodiment of the present invention;
FIG. 8A is a side view of the scooping device depicted in FIG. 8;
FIG. 9 is a perspective view of an improved scooping device in accordance with another embodiment of the present invention;
FIG.9A is a side view of the scooping device depicted in FIG. 9;
FIG. 10 is a perspective view of an improved scooping device in accordance with another embodiment of the present invention;
FIG. 10A is a side view of the scooping device depicted in FIG. 10;
FIG. 11 is a perspective view of an improved scooping device in accordance with another embodiment of the present invention;
FIG. 11A is a top view of the scooping device depicted in FIG. 11;
FIG. 11B is a rear view of the scooping device depicted in FIG. 11;
FIG. 11C is a detail view of a portion of the scooping device depicted in FIG. 11A;
FIG. 12 is a perspective view of a user using the scooping device depicted in FIG. 11 to access remaining product from a container;
FIG. 13 is a perspective view of an improved scooping device in accordance with another embodiment of the present invention;
FIG. 13A is a top view of the scooping device depicted in FIG. 13;
FIG. 13B is a rear view of the scooping device depicted in FIG. 13;
FIG. 14 is a perspective view of an improved scooping device in accordance with another embodiment of the present invention; and
FIG. 14A is a rear view of the scooping device depicted in FIG. 14.

### DETAILED DESCRIPTION OF THE INVENTION

The present invention now will be described more fully hereinafter with reference to the accompanying drawings, in which some, but not all embodiments of the invention are shown. Indeed, the present invention may be embodied in many different forms and should not be construed as limited to the embodiments set forth herein; rather, these embodiments are provided so that this disclosure will satisfy applicable legal requirements. Like numbers refer to like elements throughout.

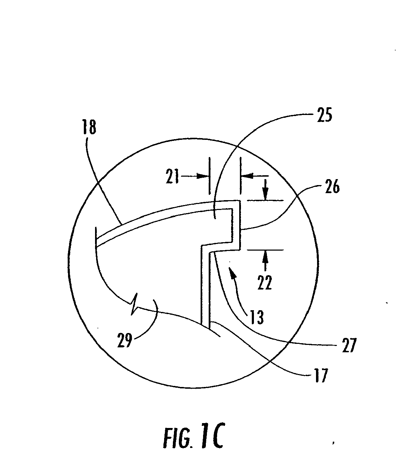

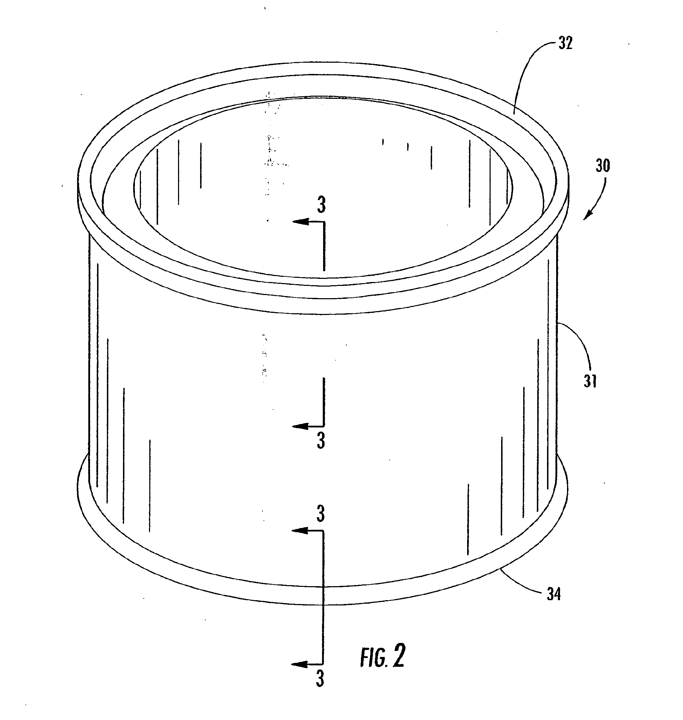

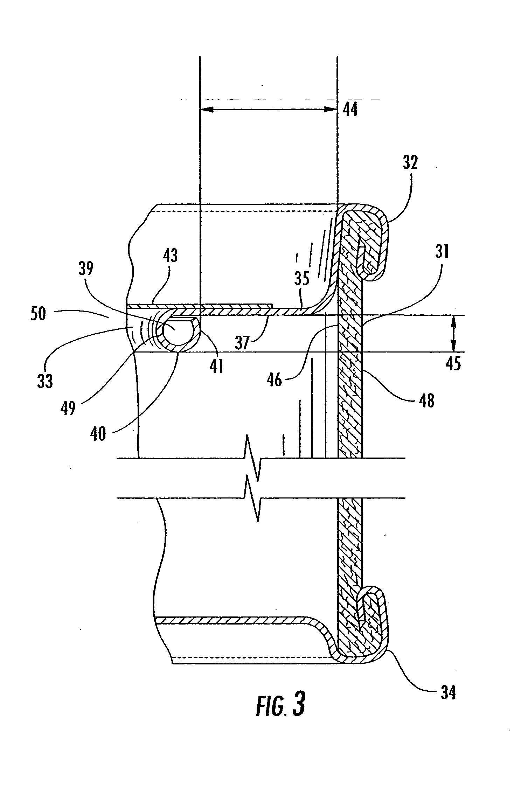

Consumer products are often enclosed in containers similar to that shown in FIGS. 2 and 3. FIG. 2 depicts a container **30** having a body wall **31** that has a first rigid end **32** defining a top of the container **30,** and a second rigid end **34** defining a bottom of the container **30.** As shown in FIG. 3, the body wall **31** can compromise a paperboard material that is spirally wound into a tubular container body so as to define an outer surface **48.** The body wall **31** also defines an inner surface **46** or may alternatively include a liner (not shown) to provide sufficient barrier properties to the container body, wherein the liner defines the inner surface **46** of the container **30.** It should be noted that further embodiments of the present invention may comprise a body wall **31** of alternative materials, such as metals or polymeric materials. In the depicted embodiment, the first rigid end **32** and the second rigid end **34** are constructed of a metal, such as steel or aluminum, but likewise may be constructed of other materials, including polymeric materials. The first rigid end **32** is affixed to the body wall **31** by crimping or seaming the first rigid end **32** around a portion of the body wall **31** that is rolled radially outward, as shown in the top portion of FIG. 3. Similarly, the second rigid end **34** is affixed to the body wall **31** by crimping or seaming the second rigid end **34** around a portion of the body wall **31** that is rolled radially outward, as also shown in the bottom portion of FIG. 3. It should be noted, however, that the first rigid end **32** and the second rigid end **34** may be affixed to the body wall **31** by alternative techniques such as by adhering, or other like methods.

In the depicted embodiment, the first rigid end **32** also includes an annular rim **35.** Rim **35** defines a planar surface extending radially inward such that it is substantially perpendicular to a longitudinal axis of the container and/or perpendicular to the container wall **31,** however further embodiments of the present invention may include an annular portion that defines non-planar surfaces or that extends at a non-perpendicular angle relative to the body wall **31** (e.g., where the wall **31** is not parallel to the axis of the container). As depicted in FIG. 3, rim **35** includes an annular lip **39** extending under the plane defined by rim **35.** Lip **39** is formed by an inner edge of rim **35** that is rolled under rim **35** so as to define a lip inner surface **49** that defines a container opening **50.** Lip **39** also defines a lip end surface **40** and a lip outer surface **41.** It should be noted that other embodiments of the present invention need not include a lip feature, such that the end of rim **35** may define the container opening **50.** In alternate embodiments of the container **30,** lip **39** may be an extension of rim **35** that extends over the plane defined by rim **35.**

Typically, container **30** is supplied to a consumer in a sealed state. In this sealed state, container opening **50** is covered by a membrane lid **43.** Membrane lid **43** typically comprises a metal foil, such as aluminum, which provides sufficient oxygen and moisture barrier properties. It should be noted that membrane lids of further embodiments of the present invention may comprise alternative materials that provide adequate barrier properties. The membrane lid **43** is advantageously sealed by heat-sealing to the upper surface of rim **35** circumferentially around the central opening **50** so that the product stored within container **30** is protected from the ingress of oxygen, moisture, contaminants, and other matter. It should be noted that further embodiments of the present invention may seal the membrane lid to the container body by alternative techniques. Container **30** is indicative of containers containing such products as coffee, powdered infant formula, mashed potato mix, powdered milk, cocoa mixes, performance drink mixes, and the like. Once received by a consumer, these containers are opened by removing the membrane lid **43.** The product contained inside the container is then accessed using a scooping and measuring device that may accompany the container **30.** As noted above, a common complaint from consumers using such scooping and measuring devices is that when there is little product left in the container, the remaining product is difficult to reach. Consumers attempting to reach this product tend to tip the container upside down. This either traps the remaining product between the lip outer surface **41** and the container wall inner surface **46,** or results in the product spilling out of the container uncontrollably.

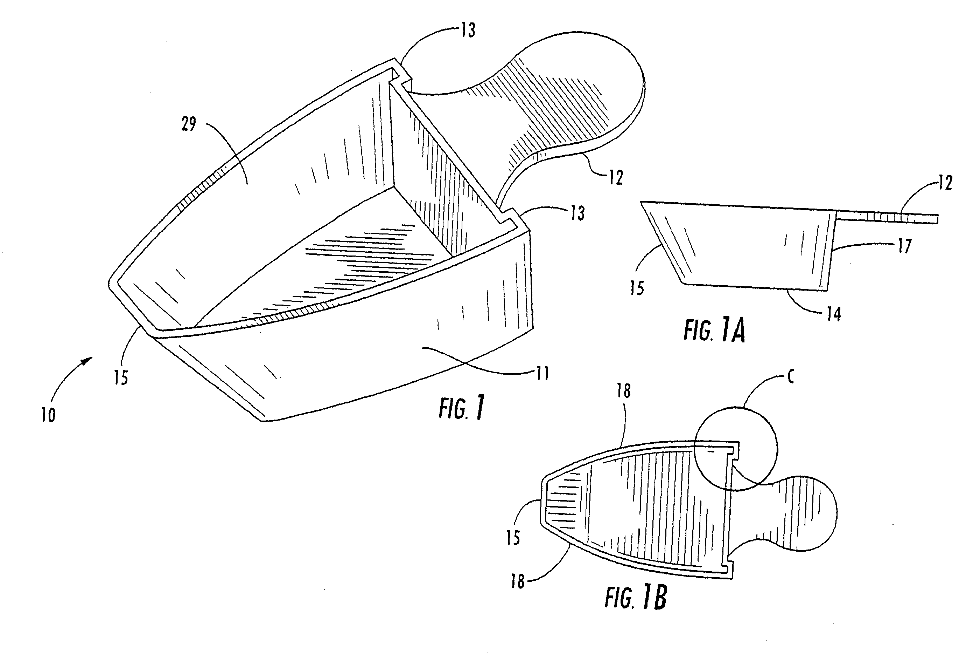

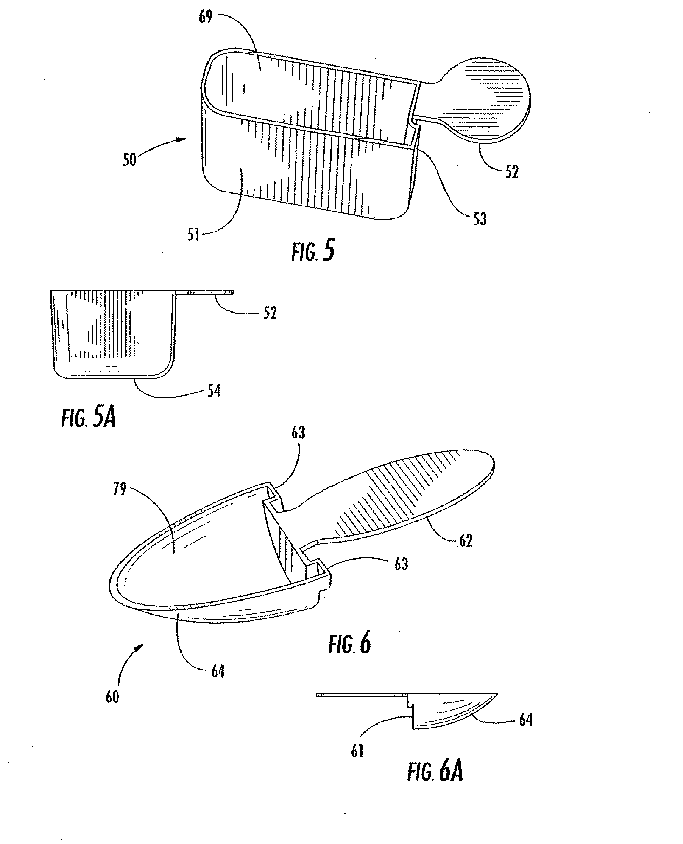

The present invention solves this problem by providing an improved measuring and scooping device. One advantageous embodiment of the present invention is shown in FIGS. 1 - 1C. A scooping device **10** of one embodiment of the present invention provides an open-ended structure that generally includes a bottom wall **14,** a side wall **11** upstanding from an outer periphery of the bottom wall **14,** a handle **12,** and at least one protruding channel feature **13.** The side wall **11** and the bottom wall **14** together define a main receptacle or main cavity **29.** In the depicted embodiment, the sidewall **11** further defines a front side **15,** a rear side **17,** and lateral sides **18.** As will be noted later, however, the side wall **11** is not limited to the depicted structure, as the side wall **11** may define any type of open-ended structure that is suitable for measuring and scooping product out of a container. The rear side **17** further defines a pair of protruding channel features **13,** however it should be noted that an alternate embodiment of the present invention may only include one protruding channel feature **13.** For example FIGS. 5 and 5A show another embodiment of the present invention. The embodiment shown in FIG. 5 includes a scoop **50** having an open-ended structure defined by a bottom wall **54** and a side wall **51.** The bottom wall **54** and the side wall **51** together define a main cavity **69.** The scoop **50** also includes a handle **52** and a protruding channel feature **53** extending from the side wall **51.** However, by providing a pair of protruding channel features **13,** as shown in FIGS. 1 - 1C, the scoop **10** may be easily operated by either left-handed or right-handed users to access product located between the inner surface **46** of the container body wall **31** and the lip outer surface **41.** Referring to FIGS. 1 - 1C, a handle **12** is attached to the rear side **17** of the side wall **11.** The handle **12** is designed to be operated using one hand and is shaped so as to fit comfortably between a user's index finger and thumb. It should be noted, however, that the handle **12** may have any structure that allows a user to manipulate the scoop **10.** It should further be noted that a handle need not be included on the scoop **10,** as the scoop **10** may be grasped and manipulated using the side wall **11.**

Referring to FIG. 1C, the protruding channel features **13** define an extended cavity **25** that is an extension of the main cavity **29** and is bounded by portions of the side wall **11.** The protruding channel features **13** further define a channel depth **21** that is measured from the rear side **17** to a channel end **26.** The protruding channel features **13** also define a channel width **22** that is measured from lateral sides **18** to an inner channel surface **27.** It should be noted that the protruding channel features **13** are not limited to the structure depicted in FIG. 1C and may have any structure that defines a channel depth **21** and a channel width **22,** including but not limited to a partial cylinder section.

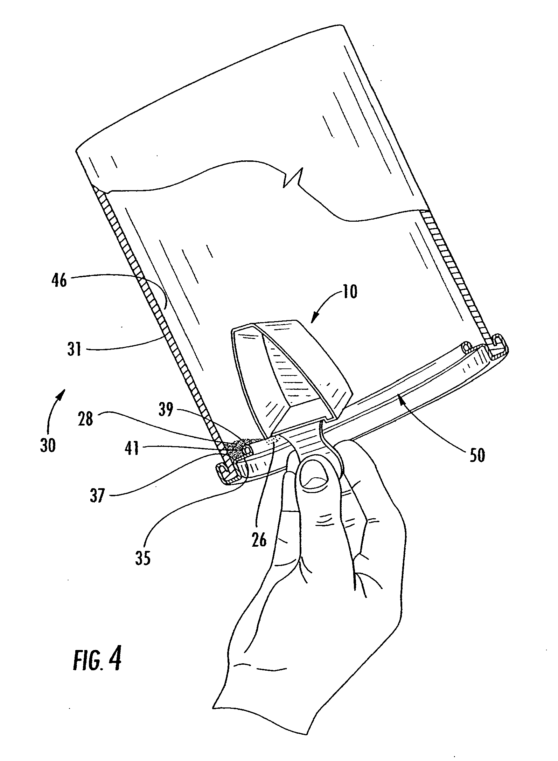

FIG. 4 shows one embodiment of the present invention being used to access remaining product **28.** The depicted embodiment shows a container **30** that has a small amount of remaining product **28.** The container **30** has been turned upside down such that the remaining product **28** is located between the inner surface **46** of container body wall **31** and the lip outer surface **41.** The scoop **10** is inserted through the central opening **50** and then oriented such that the channel end **26** is adjacent to the rim inner surface **37.** The scoop is then moved along the annular path defined by the rim **35** and lip **39** in order to access the remaining product **28** located in the container **30.**

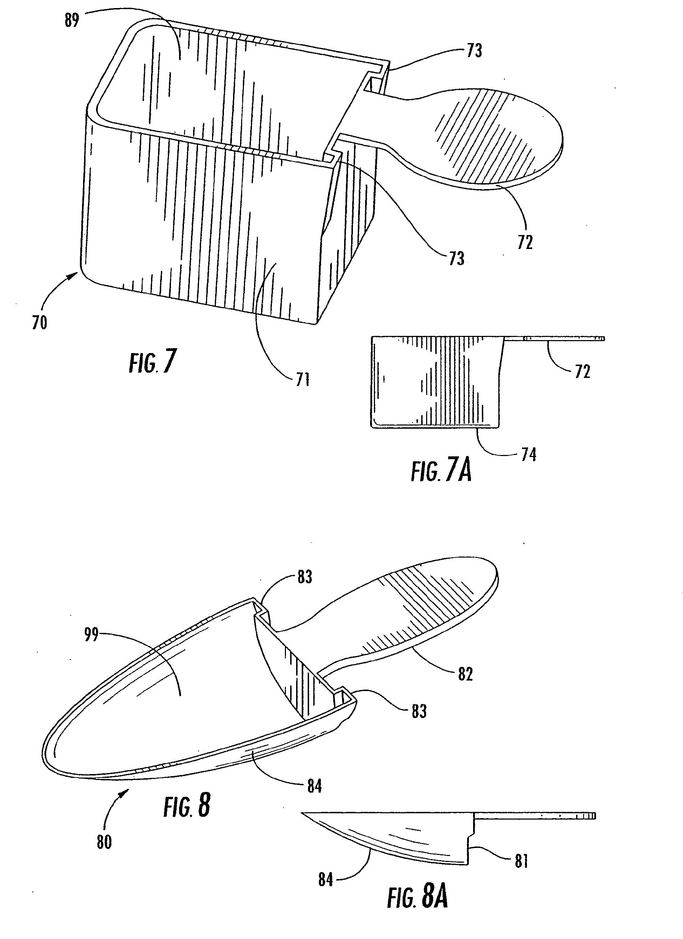

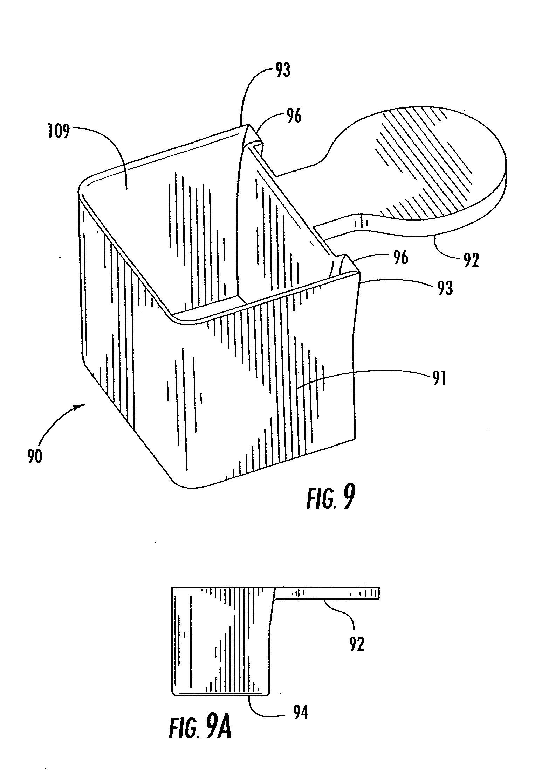

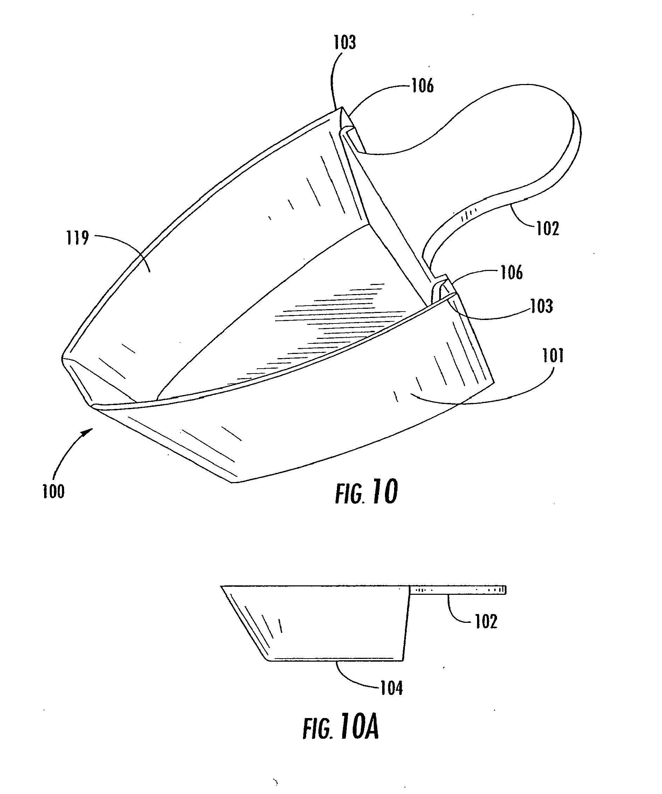

FIGS. 6 - 10 show other embodiments of the present invention. Specifically, scooping devices **60, 70, 80, 90, 100** are shown that provide main cavities **79, 89, 99,109, 119** defined by bottom walls **64, 74, 84, 94, 104** and side walls **61, 71, 81, 91, 101,** The scooping devices **60, 70, 80, 90, 100** also include handles **62, 72, 82, 92, 102,** and at least one protruding channel feature **63, 73, 83, 93, 103.** So designed, scooping devices **60, 70, 80, 90, 100** are used in a similar manner as that shown in FIG. 4 with regard to scooping device **10** of one embodiment of the present invention.

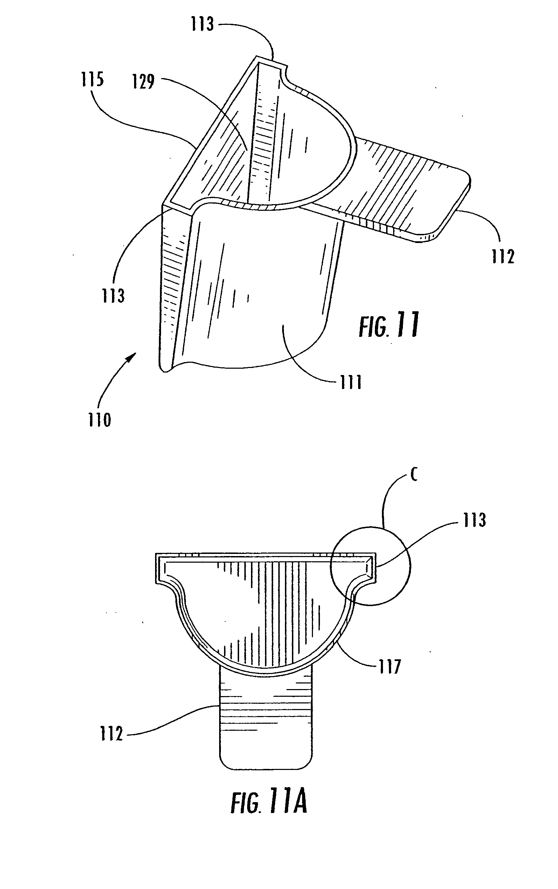

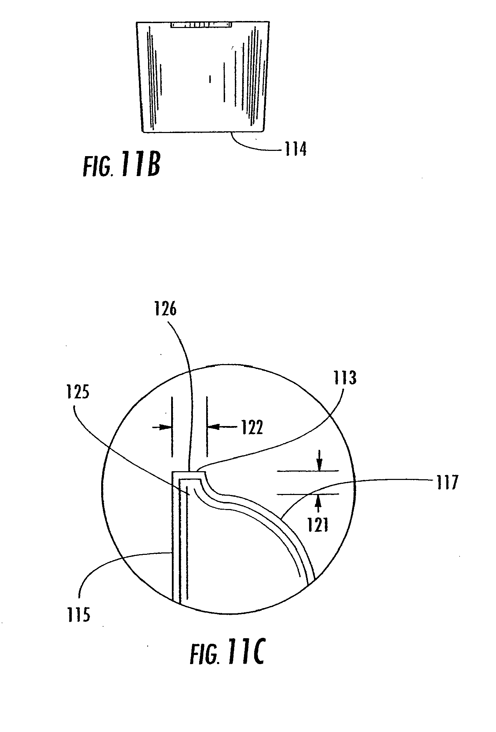

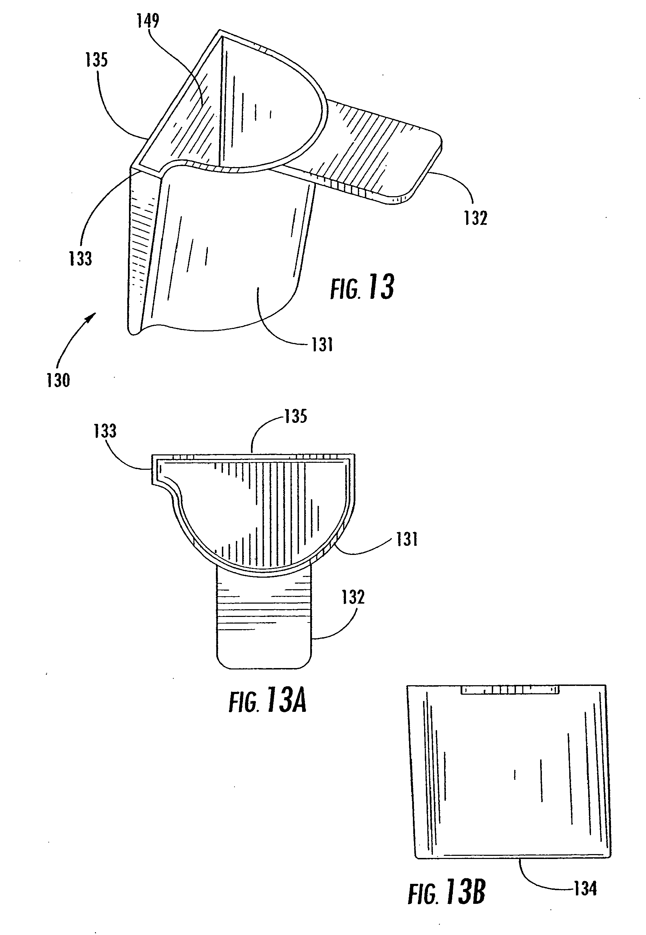

Referring to FIGS. 11 - 11C, a scooping device **110** is shown according to another embodiment of the present invention. The scooping device **110** provides an open-ended structure that generally includes a bottom wall **114** and a side wall **111** upstanding from an outer periphery of the bottom wall **114,** a handle **112,** and at least one protruding channel feature **113.** The side wall **111** and the bottom wall **114** together define a main cavity **129.** In the depicted embodiment, the side wall **111** further defines a front side **115** and a rear side **117.** As noted before, the side wall **111** is not limited to the depicted structure, as the side wall **111** may define any type of open-ended structure that is suitable for measuring and scooping product out of the container. The front side **115** further defines a pair of protruding channel features **113.** It should be noted that an alternate embodiment of the present invention may only include one protruding channel feature **113.** For example FIG. 13 shows another embodiment of the present invention. The embodiment shown in FIG. 13 includes a scoop **130** having a main cavity **149** defined by a bottom wall **134** and a side wall **131.** The scoop **130** also includes a handle **132** and a protruding channel feature **133.** However, by providing a pair of protruding channel features **113,** as shown in FIG. 11, the scoop **110** may be easily operated by either left-handed or right-handed users. A handle **112** is attached to the rear side **117** of side wall **111.** The handle **112** is designed to be operated using one hand and is shaped so as to fit comfortably between a user's index finger and thumb. It should be noted, however, that the handle **112** may have any structure that allows a user to grab and manipulate the scoop **110.** It should further be noted that the scooping device **110** need not include a handle, as a user could operate the scooping device **110** by grasping the side wall **111.**

Referring to FIG. 11C, the protruding channel features **113** define an extended cavity **125** that is an extension of the main cavity **129** and is bounded by portions of the side wall **111.** The protruding channel features **113** further define a channel depth **121** that is measured from the rear side **119** to a channel end **126.** The protruding channel features **113** also define a channel width **122** that is measured from the front side **115** to the rear side **117** along the channel feature **113.** It should be noted that the protruding channel features are not limited to the structure depicted in FIG. 11C and may have any structure that defines a channel depth **121** and a channel width **122.**

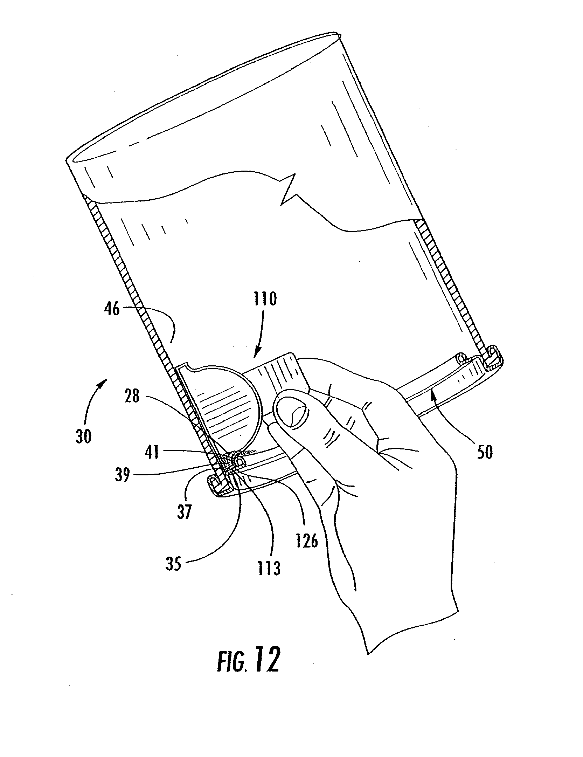

FIG. 12 shows one embodiment of the present invention being used to access remaining product **28.** The depicted embodiment shows a container **30** that has a small amount of remaining product **28.** The container **30** has been turned upside down such that the remaining product **28** is located between the inner surface **46** of container body wall **31** and the lip outer surface **41.** The scoop **110** is inserted through the central opening **50** of the container **30** and is then oriented such that the channel end **126** is adjacent to the rim inner surface **37.** The scoop is then moved along the annular path defined by the rim **35** and lip **39** in order to access the remaining product **28** located in the container **30.**

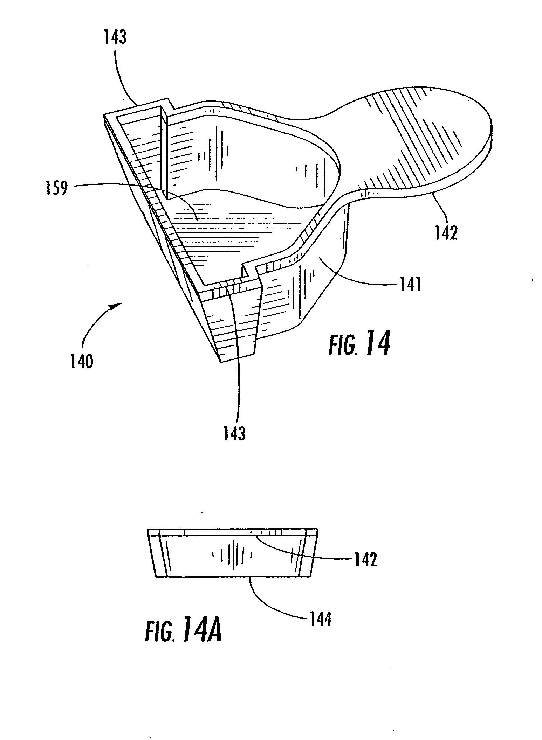

FIG. 14 shows still another embodiment of the present invention. Specifically, scooping device **140** is shown that provides an open-ended structure that generally includes a bottom wall **144,** a side wall **141,** a handle **142,** and at least one protruding channel feature **143.** The bottom wall **144** and the side wall **141** together define a main cavity **159.** So designed, scooping device **140** is used in a similar manner as that shown in FIG. 12 with regard to scooping device **110** of one embodiment of the present invention.

Thus, the present invention provides an improved scooping device for use with lipped containers. The improved scooping device includes a bottom wall and a side wall upstanding from at least a portion of an outer periphery of the bottom wall that together define an open-ended housing. A handle may also be attached to the perimeter housing wall. The scooping device also includes at least one protruding channel feature for use in scooping product located between the inside surface of the container wall and the container rim or lip. Advantageously, the present invention in one embodiment includes a pair of protruding channel features so that the scooping device may be easily manipulated by both left-handed and right-handed users.

Many modifications and other embodiments of the invention set forth herein will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A scooping device for use with a container that stores product, the container having a container wall with an inner surface, an outer surface, and an upper rim with a lip encircling an opening of the container, the lip extending radially inwardly of the inner surface of the container wall, the scooping device comprising:
a bottom wall, and a side wall upstanding from at least a portion of an outer periphery of the bottom wall to form a main receptacle for product scooped from the container;
wherein the side wall further defines at least one protruding channel feature for use in scooping product located between the inner surface of the container wall and the lip of the container rim.

2. A scooping device of Claim 1, wherein the scooping device further defines a handle attached to the side wall.

3. A scooping device of Claim 1, wherein the perimeter housing wall further defines a pair of protruding channel features for use in scooping product located between the inner surface of the container wall and the lip of the container rim.

4. A scooping device of Claim 1, wherein the side wall further defines a front side, a rear side, a first lateral side, and a second lateral side.

5. A scooping device of Claim 4, wherein the at least one protruding channel feature is defined by the front side.

6. A scooping device of Claim 4, wherein the front side further defines a pair of protruding channel features.

7. A scooping device of Claim 6, wherein the handle is attached to the rear side.

8. A scooping device of Claim 4, wherein the at least one protruding channel feature is defined by the rear side.

9. A scooping device of Claim 4, wherein the rear side further defines a pair of protruding channel features.

10. A scooping device of Claim 9, wherein the handle is attached to the rear side between the pair of channel features.

11. A scooping device of Claim 1, wherein the at least one protruding channel feature further defines a width, wherein the width is substantially equal to or less than a distance between the container wall inner surface and an outer surface of the lip.

12. A scooping device of Claim 1, wherein the at least one protruding channel feature further defines a depth, wherein the depth is substantially equal to or greater than a distance between an inner surface of the rim and an end surface of the lip.

13. A method for use in removing remaining product stored in a container, the container having a container wall with an inner surface, an outer surface, and an upper rim with a lip encircling an opening of the container, the method comprising:
providing a scooping device, the scooping device comprising a bottom wall, and a side wall upstanding from at least a portion of an outer periphery of the bottom wall to form a main receptacle for product scooped from the container, the side wall further defining at least one protruding channel feature;
inverting the container to trap the remaining product between the inner wall of the container and the lip of the container rim;
inserting the protruding channel feature of the scooping device into an area between the inner wall of the container and the lip of the container rim; and
moving the scooping device along the area in order to scoop the remaining product into the scooping device.
